# EUROPEAN PATENT SPECIFICATION

(11) **EP 1 108 531 B1**
(45) Date of publication and mention of the grant of the patent: **28.07.2004**
(21) Application number: 99125165.3
(22) Date of filing: 17.12.1999
(51) Int. Cl.: B32B 27/32, C08L 23/16, B65D 75/26, B32B 25/14

(54) **Laminated plastic film for food wrapping**
Mehrschichtiger Kunststofffilm für Lebensmittelverpackungen
Film plastique laminé pour l'emballage d'aliments

(43) Date of publication of application: 20.06.2001
(73) Proprietor: SHIN-ETSU POLYMER CO., LTD., Tokyo (JP)
(72) Inventor: Ohte, Michimasa, c/o Shin-Etsu Polymer Co., Ltd., Omiya-shi, Saitama-ken (JP); Suzuki, Hideki, c/o Shin-Etsu Polymer Co., Ltd., Omiya-shi, Saitama-ken (JP); Takizawa, Kenro, c/o Shin-Etsu Polymer Co., Ltd., Omiya-shi, Saitama-ken (JP); Kimura, Eiji, c/o Shin-Etsu Polymer Co., Ltd., Omiya-shi, Saitama-ken (JP); Shingai, Michiko, c/o Shin-Etsu Polymer Co., Ltd., Omiya-shi, Saitama-ken (JP)
(74) Representative: Luderschmidt, Schüler & Partner GbR

(56) References cited:
- EP-A- 0 165 791
- EP-A- 0 588 667
- PATENT ABSTRACTS OF JAPAN vol. 018, no. 474 (M-1668), 5 September 1994 (1994-09-05) & JP 06 155676 A (UBE IND LTD), 3 June 1994 (1994-06-03)

## Description

The present invention relates to a novel laminated plastic film suitable for wrapping of goods or, more particularly, to a laminated plastic film comprising three layers and suitable for wrapping of foods by virtue of excellent transparency, flexibility, tear strength, recoverability from stretching, heat sealability and anti-freeze resistance as well as adaptability to automatic wrapping machines of the prestretching type.

As is known, a great variety of stretchable plastic films have been developed heretofore and are now under use as a wrapping film for foods by virtue of their excellent transparency, flexibility and heat-sealability required for a wrapping film for fresh foods such as meat, fish and vegetables.

While wrapping of goods or, in particular, foods can be conducted either manually by using a hand wrapper or automatically by using an automatic wrapping machine such as an automatic wrapping machine of the push-up type and the pillow type, the working procedure of automatic wrapping works is now rapidly acquiring wider and wider prevalence in the goods circulation business since the debut of the newly developed automatic wrapping machine of the prestretching type of which several models of machines are now available on the market.

To briefly describe the mechanism of wrapping in a prestretching-type automatic wrapping machine, a continuous-length wrapping film rolled out from a film roll is cut in specified unit lengths and the cut films are transported one by one to the wrapping machine where the cut film is stretched, prior to pushing-up of the tray bearing the goods to be wrapped from below, in the transverse direction, i.e. the direction of the width of the film in the roll, in a stretching ratio of about 50% to have a 150% width as compared with the unstretched width and the tray is then pushed up at the lower surface of the thus prestretched wrapping film.

The most characteristic advantage obtained by the above mentioned prestretching-type automatic wrapping machine is, since the wrapping film is prestretched in the transverse direction to about 150% width before the tray is pushed up thereto, the material saving of the wrapping film of which the width can be as small as about two thirds as compared with the film width required in conventional automatic wrapping machines of the push-up type using an unstretched film.

A great variety of wrapping films have been developed and are currently under use as suitable for manual wrapping works or adaptable to automatic wrapping machines. For example, Japanese Patent Kokai 6-155676 proposes a three-layered laminated film consisting of a core layer which is formed from a resin blend consisting of a polypropylene, a hydrogenation product of a block copolymer of styrene and butadiene, a copolymer of ethylene and vinyl acetate and/or a copolymer of ethylene and an α-olefin monomer and covering layers laminated on each surface of the core layer formed from a copolymer of ethylene and an α-olefin monomer.

The three-layered laminated wrapping film proposed above, however, cannot be used in a prestretching-type automatic wrapping machine without serious problems. For example, the surface of the laminated film is so slippery that the film under stretching sometimes escapes from under holding by film grips necessarily to interrupt continued wrapping works. Further, the film under stretching in the transverse direction is liable to be torn apart in the machine direction or length-wise direction of the rolled film. While it is sometimes the case that the wrapping film in the wrapping procedure is stretched by 100% or more to have a 200% width as compared with the unstretched film depending on the outer configuration or bulkiness of the wrapped goods, the recoverability of the film from stretching is not high enough so that the wrapped goods on the tray cannot be tightly held to the tray by the elastic resilience of the wrapping film thereon as recovered from stretching. When the prestretched film has a tensile strength too large as compared with the strength of the tray which is made from a foamed polystyrene resin or other fragile materials, it is a possible trouble that the tray pushed up at the wrapping film under tension becomes cracked unless the tray is pushed up with utmost care. When the tensile strength of the prestretched wrapping film is too low, on the other hand, the film after completion of wrapping is sometimes wrinkled or slackened not to ensure commercially acceptable good condition of wrapping.

In addition, the anti-freeze resistance of the above proposed laminated wrapping film is not so high that the film is liable to cause cracking and rupture when the film is used for wrapping of a frozen food and stored in a freezer at a temperature of -20°C or even lower and transported as frozen receiving mechanical shocks.

EP-A-165791 discloses a laminate comprising a core layer formed from a composition comprising a blend of a rubber and a polyolefin, and two outer polyolefin-based layers attached to each side of said core layer. The use of such laminate as a parenteral drug pouch is described therein as well.

EP-A-588667 directs a laminate comprising a core layer formed from a composition comprising a blend of polypropylene and a hydrogenated petroleum product, and two outer polyolefin-based layers attached to each side of said core layer. The use of such laminate as a moisture sensitive product packaging, namely for food, is described.

Under the above described situations, the present invention has been completed as a result of the inventors' extensive investigations conducted with an object to provide a novel polyolefin-based wrapping film having excellent transparency, flexibility, tear strength, recoverability, heat sealability and anti-freeze resistance as well as good adaptability to the wrapping works by using an automatic wrapping machine of, in particular, the prestretching type.

The inventors have continued extensive investigations with an object to solve the above mentioned problems arriving at a discovery relative to wrapping films used in an automatic wrapping machine of the prestretching type that the troubles of escape of the film under prestretching from the film grips and tearing of the film in the length-wise direction under the prestretching tension cannot be avoided unless the tensile modulus and the tear strength of the film are each within a specific range because the film is prestretched by about 50% in the automatic prestretching wrapping machine. Further, the inventors have become aware that, when a tray is pushed up and hit at the wrapping film under tension for prestretching, the film is correspondingly further stretched thereby sometimes by about 100% so that the tension on the film in the transverse direction is necessarily increased to an extent to correspond to this increment in stretching over the tension corresponding to the 50% prestretching. Accordingly, troubles such as cracking of the tray, wrinkles in the film after wrapping and loss of recoverability of the film are sometimes unavoidable unless the tensile stress of the film under these tensioning conditions is within an appropriate range.

On the base of the above described findings, the inventors have continued extensive investigations to develop an improved wrapping film having excellent transparency, flexibility, tear strength, recoverability and heat sealability as well as good anti-freeze resistance and capable of exhibiting an adequate tensile stress corresponding to the above mentioned tensioning conditions and arrived at a conclusion that the above mentioned object can be accomplished with a three-layered laminated film of which the core layer is formed from a copolymeric polymer alloy of a polypropylene and an olefin-based thermoplastic elastomer such as an ethylene-propylene copolymeric rubber, referred to as EPR hereinafter.

In the first aspect of the invention directed to a food-wrapping film which is particularly suitable for manual wrapping works, the wrapping film is a three-layered laminate of which the core layer is formed from a resin blend composition comprising 100 parts by weight of an polyolefin-based thermoplastic elastomer and from 5 to 45 parts by weight of a hydrogenated petroleum resin and the covering layers laminated onto both surfaces of the core layer are each formed from a polyethjylene resin.

The second aspect of the invention relates to a wrapping film suitable for the wrapping works using a prestretching-type automatic wrapping machine, which is a three layered laminate of which the core layer is formed from a resin blend composition comprising 100 parts by weight of a polyolefin-based thermoplastic elastomer, from 5 to 45 parts by weight of a hydrogenated petroleum resin and from 3 to 30 parts by weight of a styrene-based thermoplastic elastomer and the covering layers laminated onto both surfaces of the core layer are each formed from a polyethylene resin.

Further, the third aspect of the invention relates to a food-wrapping film which is a three layered laminate of which the core layer is formed from a resin blend composition comprising 100 parts by weight of a polyolefin-based thermoplastic elastomer, from 5 to 45 parts by weight of a hydrogenated petroleum resin and from 5 to 65 parts by weight of a low-density polyethylene of a straightly linear molecular structure and the covering layers laminated onto both surfaces of the core layer are each formed from a polyethylene resin.

The fourth aspect of the invention relates to a food-wrapping film which is a three layered laminate of which the core layer is formed from a resin blend composition comprising 100 parts by weight of a polyolefin-based thermoplastic elastomer, from 5 to 45 parts by weight of a hydrogenated petroleum resin, from 3 to 30 parts by weight of a styrene-based thermoplastic elastomer and from 5 to 65 parts by weight of a low-density polyethylene of a straightly linear molecular structure and the covering layers laminated onto both surfaces of the core layer are each formed from a polyethylene resin.

The polyolefin-based thermoplastic elastomer as an ingredient of the resin blend composition forming the core layer of the inventive wrapping film is preferably a copolymeric polymer alloy consisting of a polypropylene resin and an EPR and should have a melt flow ratio (MFR) of 0.1 to 15 g/10 minutes according to ASTM D1238 at a temperature of 230°C under a load of 2.16 kgf. This copolymeric polymer alloy has a composite structure of a matrix phase and a dispersed phase obtained by fine and uniform dispersion of the EPR directly into the polypropylene under polymerization in a multistage polymerization process. The average particle diameter of the EPR as the dispersed phase is 1 µm or smaller.

The copolymeric polymer alloy above mentioned has various desirable properties as a consequence of the uniform and fine dispersion of the EPR which is an amorphous polymer in the matrix of the polypropylene resin which is a resin having crystallinity.

Firstly, the copolymeric polymer alloy has excellent flexibility as compared with various polypropylene-based resins such as homopolymeric polypropylene resins, copolymeric resins of propylene and ethylene and copolymeric resins of propylene and one or more of other α-olefin monomers. While the above named polypropylene-based resins generally have a flexural elastic modulus of 7000 to 25000 kg/cm² according to ASTM D790, for example, the copolymeric polymer alloys now available on the market have a flexural elastic modulus ranging from 500 to 5000 kg/cm² or, preferably, from 600 to 4000 kg/cm² or, more preferably, from 700 to 3000 kg/cm². This remarkable difference in the flexural elastic modulus therebetween is presumably a consequence of a decrease in the crystallinity of the polypropylene by the amorphous phase of the EPR finely and uniformly dispersed in the matrix of the polypropylene and elastic flexibility of the EPR. Accordingly, it is only by the use of such a copolymeric polymer alloy that the 50% tensile stress of the wrapping film is decreased as desired using a resin blend with a hydrogenated petroleum resin described later.

Secondly, the film can be imparted with excellent recoverability from stretching as a consequence of the synergystic effect of the rigidity possessed by the polypropylene resin and the rubbery elasticity possessed by the EPR. The increase in the tensile stress due to stretching is particularly great in the high-stretching region to give the ratios of (100% tensile stress)/(50% ensile stress) within desirable appropriate ranges imparting the wrapping film with adaptability to the prestretching-type automatic wrapping machine simply referred to as the prestretch wrapping adaptability.

Thirdly, the film is imparted with excellent tear strength as a consequence of the toughening effect by the microcrazes generated from the interface of the EPR domains at a high stretching range since the copolymeric polymer alloy is of the microscopic phase-separation type. A high tear strength is one of the essential properties of the film to have adaptability to prestretch wrapping as mentioned before.

Lastly, the'film has a working temperature range broader than polypropylene-based resins because the copolymeric polymer alloy has the heat resistance of a polypropylene resin and the anti-freeze resistance of the EPR in combination. For example, the copolymeric polymer alloy has a melting temperature of 135°C or higher to exhibit excellent heat resistance in heat sealing and the polypropylene resin is the determinant ingredient of the melting temperature while the glass transition temperature thereof is -30°C or lower since the glass transition temperature depends on the EPR to impart excellent anti-freeze resistance to the polymer alloy in contrast to polypropylene-based resins of which the glass transition temperature is -20°C or higher.

The content of EPR in the copolymeric polymer alloy is preferably in the range from 40 to 80% by weight. When the content of EPR is too low in the polymer alloy, the rubbery elasticity as a characteristic property of EPR is lost so as not to impart a fully decreased tensile modulus thereto even by further blending with a styrene-based thermoplastic elastomer or a low-density polyethylene described later. In addition, the increase in the tensile stress by stretching in a high-stretching ratio is so small that the (100% tensile stress)/(50% tensile stress ratio) cannot fall within the desired range. When the content of EPR is too high, on the other hand, an undesirable phenomenon of whitening occurs in the film as a consequence of the increase in the amount of the EPR domains in the microscopic phase separation-type structure consisting of the matrix phase and dispersed phase.

Besides the above mentioned copolymeric polymer alloy consisting of a polypropylene resin and an EPR, the olefin-based thermoplastic elastomer used for the core layer of the inventive wrapping film can alternatively be a copolymeric polymer alloy consisting of a polypropylene resin and a different rubbery polymer such as an ethylenebutylene rubber, referred to as an EBR hereinafter. The weight fraction of the EBR in such a polypropylene/EBR-based copolymeric polymer alloy should be in the range from 40 to 80%, like the copolymeric polymer alloy of a polypropylene and EPR.

The petroleum resin which is used after hydrogenation in the core layer of the inventive wrapping film is exemplified by the aliphatic petroleum resins called the C₆-fraction petroleum resins obtained by polymerizing the fractions containing unsaturated aliphatic hydrocarbon compounds produced by thermal cracking of petroleum naphtha followed by purification, aromatic petroleum resins called the C₉-fraction petroleum resins and dicyclopentadiene-based petroleum resins including those obtained by the polymerization or copolymerization of one or more of the unsaturated hydrocarbon compounds such as isoprene, 1-pentene, 1,3-pentadiene, indene, vinyl toluene, methyl styrene, styrene, methyl indene and dicyclopentadiene. In addition, the so-called synthetic terpene resins obtained from the C₅ fractions produced by thermal cracking of petroleum naphtha can also be used. The hydrogenated petroleum resins should have a number-average molecular weight in the range from 500 to 900 and a softening point in the range from 90 to 150°C or, preferably, around 125°C.

The hydrogenated petroleum resin has an alicyclic structure which exhibits steric hindrance so that the crystallinity in the polypropylene moiety constituting the copolymeric polymer alloy is further decreased thereby resulting in a further improvement of the flexibility and further decrease of the 50%-stretching tensile stress of the copolymeric polymer alloy. The above mentioned decrease in the crystallinity of the polypropylene also has an effect of increasing transparency of the resin to be suitable for practical use in respect of the transparency. The amount of the hydrogenated petroleum resin compounded in the copolymeric polymer alloy, however, is limited in order to ensure good anti-freeze resistance of the inventive wrapping film due to the relatively high glass transition point thereof which is room temperature or higher.

The compounding amount of the hydrogenated petroleum resin to form the copolymeric polymer alloy is in the range from 5 to 45 parts by weight or, preferably, from 10 to 40 parts by weight or, more preferably, from 15 to 35 parts by weight per 100 parts by weight of the olefin-based thermoplastic elastomer. When the compounding amount of the hydrogenated petroleum resin is too small, the 50%-tensile stress cannot be decreased to a desirable level along with an insufficient transparency not to ensure practical applicability of the wrapping film. When the compounding amount thereof is too large, on the other hand, the wrapping film would suffer a decrease in the anti-freeze resistance along with a decrease in the tear strength of the film as a consequence of the low molecular weight of the resin *per se.*

The three-layered laminate as the inventive wrapping film has a core layer formed from a resin composition consisting of the olefin-based thermoplastic elastomer and the hydrogenated petroleum resin described above. By virtue of this unique resinous composition forming the core layer, the wrapping film has excellent transparency, flexibility, tear strength, recoverability and heat sealability as well as good anti-freeze resistance to be suitable for use in manual wrapping works of foods. The wrapping film of this type, however, is not quite suitable for use in automatic food wrapping works using a prestretching wrapping machine because the tensile modulus thereof does not fall within the desirable range therefor.

The above mentioned defects relative to the tensile modulus as a consequence of the resinous composition forming the core layer can be remedied by compounding the resin composition further with a styrene-based thermoplastic elastomer and/or a low-density polyethylene of a straightly linear molecular structure.

The above mentioned styrene-based thermoplastic elastomer is a hydrogenation product of a copolymer formed from an aromatic vinyl monomer and a conjugated diene monomer and has an MFR value preferably in the range from 1 to 15 g/10 minutes at 230°C under a load of 2.16 kgf.

The aromatic vinyl monomer is exemplified by styrene, o-methylstyrene, p-methylstyrene and α-methylstyrene, of which styrene is preferable. The conjugated diene monomer is exemplified by butadiene, isoprene and 1,3-pentadiene. The type of the conjugated diene linkages is mainly 1,4-linkages or 1,2-linkages in each of butadiene and isoprene. The olefinic double bonds in the conjugated diene should be hydrogenated by at least 80% or, preferably, by at least 90%. When the degree of hydrogenation is too low, the thermoplastic elastomer would suffer thermal degradation in the course of shaping into a film along with occurrence of undesirable crosslinking reaction.

The hydrogenated copolymer of an aromatic vinyl monomer and the conjugated diene monomer to be used in the core layer of the inventive wrapping film is exemplified by a hydrogenation product of a diblock copolymer of styrene and butadiene (SEB), hydrogenation product of a triblock copolymer of styrene-butadiene-styrene (SEBS), hydrogenation product of a diblock copolymer of styrene and isoprene (SEP) and hydrogenation product of a triblock copolymer of styrene-isoprene-styrene (SEPS), of which SEBS and SEPS are preferable and SEBS is more preferable. The copolymer is not limited to a block copolymer but random copolymers can also be used.

The content of the styrene moiety in the above described hydrogenated copolymer is preferably in the range from 10 to 40% by weight. When the content of the styrene moiety is too low, the MFR value of the resin composition would exceed 15 g/10 minutes so that the resin composition is not suitable for inflation forming of a film due to a decrease in the stability of the resin bubble. When the content of the styrene moiety is too high, on the other hand, growth of the polystyrene domains proceeds in the microscopic phase separation structure resulting in a decrease in the transparency of the film.

The above described hydrogenation products of the copolymer generally have a relatively low elastic modulus to exhibit rubbery elasticity having a wide range for elastic deformation. The conjugated diene domains have a glass transition point as low as -30°C or below to contribute to the improvement in the anti-freeze resistance of the film.

The compounding amount of the styrene-based thermoplastic elastomer is in the range from 3 to 30 parts by weight or, preferably, from 5 to 25 parts by weight or, more preferably, from 5 to 20 parts by weight per 100 parts by weight of the olefin-based thermoplastic elastomer. When the compounding amount thereof is too small, the tensile modulus of the film cannot be decreased to a desirable level so that the film is not suitable for prestretching wrapping on an automatic machine. When the compounding amount thereof is too large, on the other hand, an increase is caused in the orientation of the film in the longitudinal direction resulting in a decrease in the tear strength of the film in the transverse direction along with a decrease in the transparency of the film due to an increase in the volume fraction of the polystyrene domains.

The low-density polyethylene of a straightly linear molecular structure used alternatively to or in combination with the above described styrene-based thermoplastic elastomer is a copolymer of ethylene and an α-olefin monomer having 4 to 12 carbon atoms in a molecule and has a density in the range from 0.880 to 0.930 g/cm³. The resin should have an MFR value preferably in the range from 0.1 to 15 g/minutes at 190°C under a load of 2.16 kgf.

The above mentioned copolymeric low-density polyethylene is prepared by the copolymerization of the monomers in the presence of a Ziegler-Natta catalyst or a single-site polymerization catalyst. Those prepared by using a single-site catalyst are preferred in respect of the higher uniformity in the distribution of the α-olefin units in the molecular structure having tie molecules derived from the α-olefin monomer. The tie molecules have an effect to decrease the tensile modulus and to improve the tear strength of the film.

The α-olefin monomer to be copolymerized with ethylene to form the copolymeric low-density polyethylene has 4 to 12 carbon atoms or, preferably, 6 to 10 carbon atoms or, more preferably, 6 to 8 carbon atoms in a molecule. The content of the α-olefin moiety in the copolymeric low-density polyethylene should be in the range from 3 to 30% by weight or, preferably, from 5 to 30% by weight or, more preferably, from 10 to 30% by weight. When the content of the a -olefin moiety is too low, the advantageous effect to be obtained by the tie molecules is not exhibited so that the tensile modulus of the film cannot be decreased to the desired level not to give adaptability to the automatic prestretching wrapping works. When the content of the α-olefin moiety is too high, on the other hand, a decrease is caused in the melting point of the copolymeric low-density polyethylene with a consequent decrease in the melting point of the resin composition not to give a film with sufficient heat resistance to withstand heat sealing.

The compounding amount of the above described copolymeric low-density polyethylene with the olefin-based thermoplastic elastomer is in the range from 5 to 65 parts by weight or, preferably, from 10 to 60 parts by weight or, more preferably, from 15 to 55 parts by weight per 100 parts by weight of the olefin-based thermoplastic elastomer. When the compounding amount thereof is too small, the tensile modulus of the film cannot be decreased to the desirable level not to impart the film with adaptability to automatic prestretching wrapping works. When the compounding amount thereof is too large, on the other hand, the resin composition forming the core layer of the laminated film suffers a decrease in the melting point not to have heat resistance to withstand heat sealing.

When the core layer of the inventive laminated wrapping film is formed from a resin composition consisting of the olefin-based thermoplastic elastomer and the hydrogenated petroleum resin with further admixture of the above described styrene-based thermoplastic elastomer or the copolymeric low-density polyethylene of a straightly linear molecular structure, the inventive wrapping film is imparted with good adaptability to automatic prestretch wrapping with a tensile modulus within an appropriate range.

Since the above described styrene-based thermoplastic elastomer and the copolymeric low-density polyethylene are employed with the same object of decreasing the tensile modulus of the film to a desirable level and they are compatible each with the other, it is optional to employ both of these two polymeric materials in combination, by which further improvement can be accomplished in the flexibility and tear strength of the film as a consequence of cancellation of the disadvantageous orientation in the styrene-based thermoplastic elastomer by the advantageous effect of the tie molecules in the copolymeric low-density polyethylene.

When the core layer of the inventive laminated wrapping film is formed from a resin composition formulated according to the above given disclosure, the wrapping film has excellent transparency, flexibility, tear strength, recoverability, heat sealability and anti-freeze resistance as well as adequate tensile properties such as 50%/100% stretching tensile stress ratio and tensile modulus in the transverse direction of the continuous-length film and is imparted with good adaptability to the automatic prestretch wrapping works.

The resin composition for formation of the core layer of the inventive laminated wrapping film can optionally be compounded with a surface active agent such as glycerin fatty acid esters, polyglycerin fatty acid esters, sorbitan fatty acid esters and polyoxyalkylene alkyl ethers including, for example, monoglycerin laurate, monoglycerin oleate, polyglycerin laurate, polyglycerin oleate, sorbitan laurate, sorbitan oleate and polyoxyethylene lauryl ethers. It is further optional with an object to prevent thermal degradation of the resin composition by oxidation during the film-forming process that the resin composition is compounded with a phenolic antioxidant working as a free radical scavenger or a phosphate-based antioxidant working as a peroxide-decomposing agent. In addition, the resin composition can optionally be compounded with a polyethylene-based resin similar to those for the covering layers sandwiching the core layer to form a laminate.

The polyethylene-based resin to form the covering layers in the inventive laminated wrapping film is exemplified by ethylene/vinyl acetate copolymeric resins, low-density polyethylenes of a straightly linear molecular structure and low-density polyethylenes, of which the resins of the former two types are preferable in respect of their high transparency.

The ethylene/vinyl acetate copolymer mentioned above should preferably have an MFR value in the range from 0.1 to 15 g/10 minutes at 190°C under a load of 2.16 kgf and the content of the vinyl acetate moiety therein is in the range from 5 to 20% by weight or, preferably, from 7 to 18% by weight or, more preferably, from 10 to 15% by weight. When the content of the vinyl acetate moiety is too low, the surface of the covering layer is free from appearance of stickiness to cause inconveniences in the wrapping works due to lack of self-adhesiveness. When the content of the vinyl acetate moiety is too high, on the other hand, the surface stickiness is too strong also to cause inconveniences in the wrapping works. Ethylene/vinyl acetate copolymeric resins usually have a glass transition point in the range from -30°C to -50°C to exhibit excellent anti-freeze resistance. The melting point of these resins usually does not exceed 100°C to ensure good heat sealability at a relatively low temperature.

The low-density polyethylene of a straightly linear molecular structure can be the same one as those optionally used in the resin composition for the core layer, of which those having a content of the a -olefin moiety in the range from 10 to 30% by weight are particularly preferable for the covering layers. When the content of the α-olefin moiety is too low, the melting point of the resin would exceed 100°C not to impart adequate heat sealability to the wrapping film while, when the content thereof is too high, the wrapping film suffers a decrease in the wrapping adaptability due to appearance of stickiness on the surface of the covering layers.

Though optional, the polyethylene-based resin for the covering layers is compounded, in order to enhance self-adhesiveness and slipperiness and to decrease fogging, with a surface active agent such as monoglycerin fatty acid esters, acetylated glycerin fatty acid esters, polyglycerin fatty acid esters, sorbitan fatty acid esters and polyoxyethylene alkyl ethers exemplified by monoglycerin laurate, monoglycerin oleate, monoglycerin monoacetomonolaurate, monoglycerin monoacetomonooleate, monoglycerin diacetomonolaurate, monoglycerin diacetomonooleate, polyglycerin laurate, polyglycerin oleate, sorbitan laurate, sorbitan oleate and polyoxyethylene lauryl ether. It is also optional that, like the resin composition for the core layer, the resin for the covering layers is compounded with a phenolic or phosphate-based antioxidant.

The wrapping film of the invention has a total thickness preferably in the range from 8 to 25 µm. The thickness of the core layer should be in the range from 3 to 20 µm and each of the covering layers should have a thickness of at least 1 µm. When the thickness of the core layer is too small, the necessary physical properties of the core layer cannot be fully exhibited so that the film cannot be imparted with adaptability to prestretching wrapping works along with a loss in the heat resistance to withstand heat sealing while, when the thickness of the core layer is too large, the covering layers of the polyethylene-based resin each necessarily have a thickness so small that the laminated film does not have good heat sealability at a relatively low temperature.

While the three-layered laminated wrapping film of the invention can be prepared either by the multilayer inflation method or by the multilayer T-die method, the multilayer inflation method is described in detail in the following.

Thus three resin compositions each corresponding to one of the three layers including the core layer and two covering layers are melted and kneaded each in an extruder machine and the melts are co-extruded at a temperature of 180 to 220°C each through one of three-layer inflation dies mounted on the extruder machines to give the respectively desired thickness of the core layer and covering layers The molten resin films, while under cooling with cooling air at 10 to 30°C, are each blown up in a blow-up ratio of 3 to 10. When the blow-up ratio in this inflation film-forming is too small, the resin composition is undesirably oriented along the direction of film-forming or, namely, in the longitudinal direction of the film while, when the blow-up ratio is too large, the blown-up bubble of the film is instabilized not to ensure smooth film formation. The laminated film formed in the above described manner is folded by a pinch roller installed in a take-off machine and wound up into a roll by a wind-up machine.

While the wrapping film of the invention having the above described three-layered laminate structure has various excellent properties, the adaptability of the film to manual wrapping works and automatic wrapping works by using a push-up automatic wrapping machine, pillow-type automatic wrapping machine or prestretching automatic wrapping machine can be estimated in terms of the 50% tensile stress determined according to JIS K7113 which should be in the range from 4.00 to 9.00 N/mm² or, preferably, from 4.50 to 8.50 N/mm². When the 50% tensile stress is too small, the film is excessively flexible so that the film on the wrapped goods is sometimes under insufficient tension and exhibits slackening or wrinkles when wrapped articles are piled up for the purpose of display. When the 50% tensile stress is too large, on the other hand, the wrapping film is too stiff and less liable to stretching sometimes resulting in cracking of the tray holding the goods for wrapping.

The ratio of (100% tensile stress)/(50% tensile stress) according to JIS K7112 in the transverse direction of the film, which serves as a measure of adaptability of the film to prestretching wrapping works, should be in the range from 1.05 to 1.45 or, preferably, from 1.10 to 1.40 advantageously to indicate an increase of the tensile stress in a high stretching ratio. When the above mentioned ratio is too small, the tensile stress cannot be adequately increased by stretching so that the wrapping film on a wrapped article cannot be in a slack-free condition when the film is used for automatic prestretching wrapping. When the ratio is too large, on the other hand, the film is excessively tough so that cracking of the tray is sometimes caused when the film is pushed up for wrapping.

The tensile modulus of the film in the transverse direction according to JIS K7113, which also serves as a measure of the adaptability of the film to prestretching wrapping works, should be in the range from 30 to 80 N/mm² or, preferably, from 35 to 75 N/mm². When the tensile modulus is too small, the wrapping film on a wrapped article is in a wrinkled condition while, when the tensile modulus is too large, a trouble may be caused in prestretching that the film under prestretching escapes from the film grips due to excessively high elastic resilience.

The tensile strength of the film in the transverse direction according to JIS K6732, which serves as a measure of orientation of the film and adaptability of the film to prestretching wrapping works, should be in the range from 50 to 90 N/mm² or, preferably, from 50 to 85 N/mm². When this value is too low, orientation of the film in the longitudinal direction is so strong as compared with the transverse direction that the film under prestretching is sometimes torn apart along the longitudinal direction in automatic prestretching wrapping works and also in manual wrapping works with uncontrollable pinching pressure of the finger tips. When the tensile strength in the transverse direction is too high, on the other hand, the orientation of the film in the transverse direction is so high that the film on a wrapped article cannot be in a wrinkle-free condition.

A measure for the anti-freeze resistance of the wrapping film can be provided by the flexibility temperature according to JIS K6745 and anti-freeze falling ball test of the resin composition forming the core layer.

Since the inventive wrapping film has a three-layered laminated structure consisting of a core layer sandwiched with covering layers each made from a polyethylene-based resin which inherently has excellent anti-freeze resistance with a glass transition point of -30°C or lower, the anti-freeze resistance of the wrapping film as a whole largely depends on the resin composition forming the core layer. If the core layer be formed from a single polypropylene resin as such, the anti-freeze resistance of the wrapping film could be estimated from the glass transition point thereof. In the inventive wrapping film, however, the core layer is formed from a resin composition comprising two kinds or more of component polymers so that it is not a simple matter to estimate the anti-freeze resistance of the film from the glass transition points of the individual component polymers.

The inventors' extensive investigations to solve this problem have led to a conclusion that the flexibility temperature of the resin composition, in place of the glass transition point, well serves as a measure of the anti-freeze resistance of the film.

When the flexibility temperature of the resin composition forming the core layer does not exceed -30°C, namely, the film is not destroyed in the anti-freeze falling ball test at -30°C so that the film can be used safely without cracking for wrapping of foods to be freeze-stored at about -30°C. The flexibility temperature of the resin composition, however, cannot be lower than -60°C as a consequence of the inherency of the component polymers forming the resin composition.

The wrapping film of the present invention, of which the core layer is formed from a resin composition comprising, as the principal ingredient, a copolymeric polymer alloy of polypropylene and EPR as an olefin-based thermoplastic elastomer, has excellent characteristic properties including the (100% tensile stress)/(50% tensile stress) ratio, tear strength, recoverability, heat resistance to withstand heat sealing and anti-freeze resistance each in a desirable range. The film can further be imparted with a desirable 50% tensile stress by compounding the resin composition with a hydrogenated petroleum resin and transparency enhanced to a practically feasible level. Further compounding of the resin composition with a styrene-based thermoplastic elastomer and/or low-density polyethylene of a linear molecular structure has an effect to impart the film with a desirable tensile modulus.

The wrapping film of the present invention has excellent anti-freeze resistance without troubles of cracking of the film on frozen foods by the mechanical shocks during transportation as kept in a freezer since the film has a three-layered laminated structure consisting of a resin composition forming the core layer having a flexibility temperature of -30°C or below and two covering layers each formed from a polyethylene-based resin having a glass transition point not exceeding -30°C. Use of a low-density polyethylene-based resin for the covering layers is advantageous in respect of imparting the film with heat sealability at a relatively low temperature.

In the following, the wrapping film of the present invention is described in more detail by way of Examples and Comparative Examples. The materials used in these examples as the constituents of the films and characterization thereof are shown below.

### [Core layers]

A. Olefin-based thermoplastic elastomer
   A-I: Adflex KS-353P (trade name by Monteloo JPO Co.), content of EPR 70% by weight, MFR 0.45 g/10 minutes, flexural modulus 860 kg/cm², glass transition point -42°C
   A-II: Adflex C-200F (trade name by Monteloo JPO Co.), content of EPR 50% by weight, MFR 6.0 g/10 minutes, flexural modulus 300 kg/cm², glass transition point -40°C
B. Hydrogenated petroleum resin
   B-I: Arcon P-125 (trade name by Arakawa Chemical Industry Co.), softening point 125°C, glass transition point 78°C
   B-II: Arcon P-115 (trade name by Arakawa Chemical Industry Co.), softening point 115°C, glass transition point 72°C
C. Styrene-based thermoplastic elastomer
   C-I: Kraton G1657 (trade name by Shell Japan Co.), SEBS type, content of styrene 13% by weight, MFR 9 g/10 minutes, glass transition point -58°C
   C-II: Kraton G1652 (trade name by Shell Japan Co.), SEBS type, content of styrene 29% by weight, MFR 1.3 g/10 minutes, glass transition point -58°C
D. Low-density polyethylene of linear molecular structure
   D-I: Affinity EG8100 (trade name by Dow Chemical Japan Co.). ethylene-octene copolymer, content of octene 24% by weight, MFR 1.0 g/10 minutes, glass transition point -50°C
   D-II: Affinity EG8200 (trade name by Dow Chemical Japan Co.). ethylene-octene copolymer, content of octene 22% by weight, MFR 5.0 g/10 minutes, glass transition point -49°C
E. Propylene-ethylene copolymer
   Sumitomo Noplene S-131 (trade name by Sumitomo Chemical Co.), ethylene-propylene random copolymer, MFR 1.2 g/10 minutes, flexural modulus 7200 kg/cm², glass transition point -15°C

### [Covering layers]

F. Ethylene-vinyl acetate copolymer
   NUC-3758 (trade name by Nippon Unicar Co.), content of vinyl acetate 15% by weight, MFR 2.2 g/10 minutes, glass transition point -32°C
G. Low-density polyethylene of linear molecular structure

Affinity EG8100 (trade name by Dow Chemical Japan Co.). ethylene-octene copolymer, content of octene 24% by weight, MFR 1.0 g/10 minutes, glass transition point -50°C (same as D-I)

The characterizing properties of the above specified resinous materials, i.e. MFR, flexural modulus and glass transition point were measured by the methods shown below.

MFR: Measurement was performed according to ASTM D1238.

Flexural modulus: Measurement was performed according to ASTM D790.

Glass transition point: Measurement was performed according to JIS K7121.

Evaluation of the films was conducted for the following items each by the testing procedure shown there.
I. Film properties
   (I-a) Transparency (Haze)
      The haze value in % was measured for a single film according to JIS K7105. Practical applicability of the film is ensured with the haze value not exceeding 2.0%.
   (I-b) Tensile properties
   (I-b-1) 50% tensile stress
      Measurement was performed according to JIS K7113 at a pulling velocity of 200 m/minute.
   (I-b-2) 100% tensile stress
      Measurement was performed according to JIS K7113 at a pulling velocity of 200 m/minute.
   (I-b-3) Tensile modulus
      Measurement was performed according to JIS K7113 at a pulling velocity of 5 m/minute.
   (I-b-4) Tear strength
      Measurement was performed according to JIS K6732 at a pulling velocity of 200 m/minute.
   (I-b-5) Recoverability
      A steel ball of 30 g weight having a diameter of about 2 cm was mounted on the film horizontally held without slackening and pushed down by 2 cm height followed by removal of the ball from the film. The results were rated as Good or Poor when depression and creases of the film disappeared or not, respectively, after lapse of 10 seconds.
II. Heat sealability
   (II-a) Low-temperature heat sealability
      A PSP tray (SK-20, a product by Chuou Kagaku Co.) holding an article of 200 g weight mounted thereon was manually wrapped with the film under testing by using a hand wrapper and the thus wrapped tray bearing the article was kept standing on a hot plate at a surface temperature of 100°C for 2 seconds. The wrapping condition was then inspected visually to find melt-bonding of the film in a portion with overlapping of a plurality of layers of the film and the results were recorded as Good or Poor when melt-bonding was obtained or not, respectively.
   (II-b) Heat resistance to withstand heat sealing
      A PSP tray wrapped with the film in the same manner as in (II-a) above was kept standing on a hot plate of 140°C for 2 seconds and the condition of the wrapping film in a portion with overlapping of a plurality of layers of the film was visually inspected to record the results as Good or Poor when the film layers was melt-bonded without occurrence of a hole by melting down of the film and when otherwise, respectively.
III. Adaptability to prestretch wrapping
   One hundred PSP trays (C-33, a product by Chuou Kagaku Co.) each holding an article of 200 g weight mounted thereon were wrapped with the film by using an automatic prestretching wrapping machine (Model AW-3600, a product by Teraoka Seiko Co.) and the workability in the wrapping works and conditions of wrapping were recorded for the following items.
   (III-a) Prestretchability
      Prestretchability of the film was recorded as Good, Poor or Bad when occurrence of escape of the film from the film grips or tearing of the film occurred in two or less of the 100 runs, when film escape occurred in three or more of the 100 runs and when film tearing occurred in three or more of the 100 runs, respectively.
   (III-b) Tray cracking
      The trays after 100 runs of wrapping were visually inspected and the results were recorded as Good or Poor when none of the trays was cracked and when one or more trays were cracked, respectively.
   (III-c) Wrinkles and slackening of film
      The wrapping films on the 100 wrapped trays were visually inspected and the results were recorded as Good or Poor when wrinkles and slackening of the film were found in two or less of the 100 runs and in three or more of the 100 runs, respectively.
   (III-d) Sealability
      The wrapping films on the 100 wrapped trays were visually inspected for the conditions of bottom sealing and the results were recorded as Good or Poor when bottom sealing was incomplete or a hole by melting down of the film was detected in two or less of the 100 runs and in three or more of the 100 runs, respectively.
   (III-e) Film breaking
      The wrapping films on the 100 wrapped trays were visually inspected for occurrence of film breaking and the results were recorded as Good or Poor when film breaking was found in two or less of the 100 runs and in three or more of the 100 runs, respectively.
IV. Adaptability to manual wrapping
   Fifty trays (SK-20, *supra*) each holding an article of 200 g weight mounted thereon were manually wrapped with the film by using a hand wrapper to visually inspect for the following items.
   (IV-a) Wrinkles and slackening of film
      The wrapping films on the 50 wrapped trays were visually inspected and the results were recorded as Good or Poor when wrinkles and slackening of the film were found in two or less of the 50 runs and in three or more of the 50 runs, respectively.
   (IV-b) Sealability
      The wrapping films on the 50 wrapped trays were visually inspected for the conditions of bottom sealing and the results were recorded as Good or Poor when bottom sealing was incomplete or a hole by melting down of the film was detected in two or less of the 50 runs and in three or more of the 50 runs, respectively.
   (IV-c) Film breaking
      The wrapping films on the 50 wrapped trays were visually inspected for occurrence of film breaking and the results were recorded as Good or Poor when film breaking was found in two or less of the 50 runs and in three or more of the 50 runs, respectively.
V. Anti-freeze resistance
   (V-a) Flexibility temperature
      Measurements were made for the resin composition for the core layer according to the procedure specified in JIS K6745.
   (V-b) Anti-freeze falling ball test

Three cylindrical frames each having an inner diameter of 76 mm and outer diameter of 85 mm were covered with the film under testing spread on one end surface thereof and fixed thereto in a slack-free fashion. After keeping at -30°C for 24 hours, a steel ball of 50 g weight having a diameter of about 2.4 cm was dropped at the same temperature from a height of 30 cm above the film to hit the center portion of the film. The results were recorded as Good or Poor when none of the films in the three test specimens was destroyed or the films in one or more of the three test specimens were destroyed, respectively.

In the following examples, the term of "parts" for the amount of each of the polymeric ingredients refers to "parts by weight".

### Example 1.

A resin composition for the core layer was prepared from 100 parts of the resin A-I and 15 parts of the resin B-I. A three-layered laminated film consisting of a 6 µm thick core layer of the above mentioned resin composition and two covering layers of the resin F each having a thickness of 3 µm by the method of multilayer inflation forming.

### Example 2.

A three-layered laminated film was prepared in the same manner as in Example 1 excepting for an increase of the amount of the resin B-I from 15 parts to 25 parts.

### Example 3.

A three-layered laminated film was prepared in the same manner as in Example 1 excepting for an increase of the amount of the resin B-I from 15 parts to 35 parts.

### Example 4.

A three-layered laminated film was prepared in the same manner as in Example 1 excepting for an increase of the amount of the resin B-I from 15 parts to 25 parts and additional admixture of 5 parts of the resin C-I to the resin composition for the core layer.

### Example 5.

A three-layered laminated film was prepared in the same manner as in Example 4 excepting for an increase of the amount of the resin C-I from 5 parts to 13 parts.

### Example 6.

A three-layered laminated film was prepared in the same manner as in Example 4 excepting for an increase in the amount of the resin C-I from 5 parts to 20 parts.

### Example 7.

A three-layered laminated film was prepared in the same manner as in Example 1 excepting for an increase of the amount of the resin B-I from 15 parts to 25 parts and additional admixture of 15 parts of the resin D-I to the resin composition for the core layer.

### Example 8.

A three-layered laminated film was prepared in the same manner as in Example 7 excepting for an increase in the amount of the resin D-I from 15 parts to 35 parts.

### Example 9.

A three-layered laminated film was prepared in the same manner as in Example 7 excepting for an increase in the amount of the resin D-I from 15 parts to 55 parts.

### Example 10.

A three-layered laminated film was prepared in the same manner as in Example 1 excepting for additional admixture of 13 parts of the resin C-I and 35 parts of the resin D-I to the resin composition for the core layer.

### Example 11.

A three-layered laminated film was prepared in the same manner as in Example 10 excepting for an increase in the amount of the resin B-I from 15 parts to 25 parts.

### Example 12.

A three-layered laminated film was prepared in the same manner as in Example 10 excepting for an increase to the amount of the resin B-I from 15 parts to 35 parts.

### Example 13.

A three-layered laminated film was prepared in the same manner as in Example 2 excepting for additional admixture of 5 parts of the resin C-I and 35 parts of the resin D-I to the resin composition for the core layer.

### Example 14.

A three-layered laminated film was prepared in the same manner as in Example 13 excepting for an increase in the amount of the resin C-I from 5 parts to 20 parts.

### Example 15.

A three-layered laminated film was prepared in the same manner as in Example 2 excepting for additional admixture of 13 parts of the resin C-I and 15 parts of the resin D-I to the resin composition for the core layer.

### Example 16.

A three-layered laminated film was prepared in the same manner as in Example 15 excepting for an increase in the amount of the resin D-I from 15 parts to 55 parts.

### Example 17.

A three-layered laminated film was prepared in the same manner as in Example 14 excepting for the replacement of the resin A-I with the same amount of the resin A-II.

### Example 18.

A three-layered laminated film was prepared in the same manner as in Example 11 excepting for the replacement of the resin B-I with the same amount of the resin B-II.

### Example 19.

A three-layered laminated film was prepared in the same manner as in Example 16 excepting for the replacement of the resin C-I with the same amount of the resin C-II.

### Example 20.

A three-layered laminated film was prepared in the same manner as in Example 17 excepting for a decrease of the resin D-I with the same amount of the resin D-II.

### Example 21.

A three-layered laminated film was prepared in the same manner as in Example 2 excepting for the replacement of the resin F for the covering layers with the resin G.

### Example 22.

A three-layered laminated film was prepared in the same manner as in Example 21 excepting for additional admixture of 13 parts of the resin C-1 to the resin composition for the core layer.

### Example 23.

A three-layered laminated film was prepared in the same manner as in Example 21 excepting for additional admixture of 35 parts of the resin D-I to the resin composition for the core layer.

### Example 24.

A three-layered laminated film was prepared in the same manner as in Example 21 excepting for additional admixture of 13 parts of the resin C-1 and 35 parts of the resin D-I to the resin composition for the core layer.

### Comparative Example 1.

A three-layered laminated film was prepared in the same manner as in Example 1 excepting for a decrease of the amount of the resin B-I from 15 parts to 3 parts.

### Comparative Example 2.

A three-layered laminated film was prepared in the same manner as in Comparative Example 1 excepting for an increase of the amount of the resin B-I from 3 parts to 47 parts.

### Comparative Example 3.

A three-layered laminated film was prepared in the same manner as in Example 2 excepting for additional admixture of 1 part of the resin C-I to the resin composition for the core layer.

### Comparative Example 4.

A three-layered laminated film was prepared in the same manner as in Comparative Example 3 excepting for an increase of the amount of the resin B-I from 1 part to 32 parts.

### Comparative Example 5.

A three-layered laminated film was prepared in the same manner as in Example 2 excepting for additional admixture of 3 parts of the resin D-I to the resin composition for the core layer.

### Comparative Example 6.

A three-layered laminated film was prepared in the same manner as in Example 2 excepting for additional admixture of 67 parts of the resin D-I to the resin composition for the core layer.

### Comparative Example 7.

A three-layered laminated film was prepared in the same manner as in Example 1 except that the core layer was formed from the resin E as such.

The results of the evaluation tests for the laminated wrapping films in the above described Examples and Comparative Examples are tabulated in Tables 1 to 3 given below.

**Table 1**

| Testing Item Testing Item | (I-a), % | (I-b-1) N/mm² | (I-b-2) N/mm² | (I-b-2) / (I-b-1) | (I-b-3) N/mm² | (I-b-4) N/mm² | (Ib-5) |
|---|---|---|---|---|---|---|---|
| Example 1 | 1.8 | 8.42 | 10.69 | 1.27 | 84.54 | 75.32 | Good |
| Example 2 | 1.5 | 8.14 | 10.34 | 1.27 | 82.10 | 70.48 | Good |
| Example 3 | 1.2 | 7.79 | 9.89 | 1.27 | 80.63 | 66.62 | Good |
| Example 4 | 1.4 | 7.13 | 8.77 | 1.23 | 68.42 | 70.89 | Good |
| Example 5 | 1.5 | 6.89 | 8.41 | 1.22 | 64.57 | 67.84 | Good |
| Example 6 | 1.7 | 6.61 | 8.06 | 1.22 | 60.96 | 63.99 | Good |
| Example 7 | 1.5 | 7.64 | 9.55 | 1.25 | 75.27 | 74.90 | Good |
| Example 8 | 1.5 | 7.33 | 9.09 | 1.24 | 72.14 | 79.49 | Good |
| Example 9 | 1.6 | 6.91 | 8.57 | 1.24 | 68.23 | 84.44 | Good |
| Example 10 | 1.7 | 6.86 | 8.44 | 1.23 | 58.87 | 79.48 | Good |
| Example 11 | 1.5 | 6.57 | 8.08 | 1.23 | 56.76 | 75.25 | Good |
| Example 12 | 1.3 | 6.22 | 7.65 | 1.23 | 54.17 | 70.39 | Good |
| Example 13 | 1.4 | 6.70 | 8.24 | 1.23 | 60.93 | 78.30 | Good |
| Example 14 | 1.6 | 6.34 | 7.80 | 1.23 | 52.76 | 71.37 | Good |
| Example 15 | 1.5 | 6.86 | 8.44 | 1.23 | 59.20 | 71.96 | Good |
| Example 16 | 1.5 | 6.27 | 7.71 | 1.23 | 53.75 | 80.45 | Good |
| Example 17 | 1.5 | 6.65 | 8.18 | 1.23 | 58.21 | 77.76 | Good |
| Example 18 | 1.5 | 6.50 | 8.00 | 1.23 | 55.71 | 74.34 | Good |
| Example 19 | 1.6 | 6.79 | 8.35 | 1.23 | 59.57 | 70.41 | Good |
| Example 20 | 1.5 | 6.41 | 7.88 | 1.23 | 53.67 | 73.92 | Good |
| Example 21 | 1.6 | 8.09 | 10.19 | 1.26 | 81.32 | 75.90 | Good |
| Example 22 | 1.6 | 6.72 | 8.20 | 1.22 | 64.37 | 72.28 | Good |
| Example 23 | 1.6 | 7.19 | 8.92 | 1.24 | 71.13 | 84.43 | Good |
| Example 24 | 1.6 | 6.48 | 7.97 | 1.23 | 54.92 | 80.89 | Good |
| Comparative Example 1 | 2.2 | 9.25 | 11.75 | 1.27 | 89.39 | 80.51 | Good |
| Comparative Example 2 | 1.0 | 7.08 | 8.92 | 1.26 | 76.54 | 48.33 | Good |
| Comparative Example 3 | 1.3 | 7.91 | 10.05 | 1.27 | 81.49 | 70.02 | Good |
| Comparative Example 4 | 2.1 | 6.13 | 7.42 | 1.21 | 55.30 | 47.65 | Good |
| Comparative Example 5 | 1.3 | 7.94 | 10.08 | 1.27 | 81.38 | 70.26 | Good |
| Comparative Example 6 | 1.6 | 6.55 | 8.06 | 1.23 | 60.11 | 88.76 | Good |
| Comparative Example 7 | 1.5 | 9.64 | 9.74 | 1.01 | 95.40 | 54.11 | Poor |

**Table 2**

| Testing Item | (II-a) | (II-b) | (III-a) | (III-b) | (III-c) | (III-d) | (III-e) |
|---|---|---|---|---|---|---|---|
| Example 1 | Good | Good | - | - | - | - | - |
| Example 2 | Good | Good | - | - | - | - | - |
| Example 3 | Good | Good | - | - | - | - | - |
| Example 4 | Good | Good | Good | Good | Good | Good | Good |
| Example 5 | Good | Good | Good | Good | Good | Good | Good |
| Example 6 | Good | Good | Good | Good | Good | Good | Good |
| Example 7 | Good | Good | Good | Good | Good | Good | Good |
| Example 8 | Good | Good | Good | Good | Good | Good | Good |
| Example 9 | Good | Good | Good | Good | Good | Good | Good |
| Example 10 | Good | Good | Good | Good | Good | Good | Good |
| Example 11 | Good | Good | Good | Good | Good | Good | Good |
| Example 12 | Good | Good | Good | Good | Good | Good | Good |
| Example 13 | Good | Good | Good | Good | Good | Good | Good |
| Example 14 | Good | Good | Good | Good | Good | Good | Good |
| Example 15 | Good | Good | Good | Good | Good | Good | Good |
| Example 16 | Good | Good | Good | Good | Good | Good | Good |
| Example 17 | Good | Good | Good | Good | Good | Good | Good |
| Example 18 | Good | Good | Good | Good | Good | Good | Good |
| Example 19 | Good | Good | Good | Good | Good | Good | Good |
| Example 20 | Good | Good | Good | Good | Good | Good | Good |
| Example 21 | Good | Good | Good | Good | Good | Good | Good |
| Example 22 | Good | Good | Good | Good | Good | Good | Good |
| Example 23 | Good | Good | Good | Good | Good | Good | Good |
| Example 24 | Good | Good | Good | Good | Good | Good | Good |
| Comparative Example 1 | Good | Good | - | - | - | - | - |
| Comparative Example 2 | Good | Good | - | - | - | - | - |
| Comparative Example 3 | Good | Good | Poor | Good | Good | Poor | Good |
| Comparative Example 4 | Good | Good | Bad | Good | Good | Good | Poor |
| Comparative Example 5 | Good | Good | Poor | Good | Good | Poor | Good |
| Comparative Example 6 | Good | Poor | Good | Good | Good | Poor | Good |
| Comparative Example 7 | Good | Good | - | - | - | - | - |

**Table 3**

| Testing Item | (IV-a) | (IV-b) | (IV-c) | (V-a) | (V-b) |
|---|---|---|---|---|---|
| Example 1 | Good | Good | Good | -42 | Good |
| Example 2 | Good | Good | Good | -38 | Good |
| Example 3 | Good | Good | Good | -34 | Good |
| Example 4 | Good | Good | Good | -39 | Good |
| Example 5 | Good | Good | Good | -41 | Good |
| Example 6 | Good | Good | Good | -43 | Good |
| Example 7 | Good | Good | Good | -42 | Good |
| Example 8 | Good | Good | Good | -44 | Good |
| Example 9 | Good | Good | Good | -47 | Good |
| Example 10 | Good | Good | Good | -49 | Good |
| Example 11 | Good | Good | Good | -46 | Good |
| Example 12 | Good | Good | Good | -43 | Good |
| Example 13 | Good | Good | Good | -44 | Good |
| Example 14 | Good | Good | Good | -48 | Good |
| Example 15 | Good | Good | Good | -43 | Good |
| Example 16 | Good | Good | Good | -48 | Good |
| Example 17 | Good | Good | Good | -45 | Good |
| Example 18 | Good | Good | Good | -44 | Good |
| Example 19 | Good | Good | Good | -46 | Good |
| Example 20 | Good | Good | Good | -46 | Good |
| Example 21 | Good | Good | Good | -38 | Good |
| Example 22 | Good | Good | Good | -41 | Good |
| Example 23 | Good | Good | Good | -44 | Good |
| Example 24 | Good | Good | Good | -46 | Good |
| Comparative Examnle 1 | Good | Good | Good | -44 | Good |
| Comparative Example 2 | Good | Good | Poor | -28 | Poor |
| Comparative Example 3 | Good | Good | Good | -38 | Good |
| Comparative Example 4 | Good | Good | Poor | -46 | Good |
| Comparative Example 5 | Good | Good | Good | -39 | Good |
| Comparative Example 6 | Good | Poor | Good | -48 | Good |
| Comparative Examnle 7 | Good | Poor | Good | -25 | Poor |

## Claims

1. A laminated plastic film for food wrapping which comprises:
(A) a core layer formed from a resin composition comprising (a) 100 parts by weight of an olefin-based thermoplastic elastomer and (b) from 5 to 45 parts by weight of a hydrogenated petroleum resin; and
(B) two covering layers formed from a polyethylene-based resin each bonded to one of the surfaces of the core layer.

2. The laminated plastic film for food wrapping according to claim 1 in which the olefin-based thermoplastic elastomer as the component (a) is a copolymeric polymer alloy consisting of a polypropylene and an ethylene/propylene copolymeric rubber.

3. The laminated plastic film for food wrapping according to claim 2 in which the amount of the ethylene/propylene copolymeric rubber in the copolymeric polymer alloy as the component (a) is in the range from 40 to 80% by weight, the balance being the polypropylene.

4. The laminated plastic film for food wrapping according to claim 1 in which the amount of the hydrogenated petroleum resin as the component (b) in the resin composition forming the core layer is in the range from 10 to 40 parts by weight per 100 parts by weight of the olefin-based thermoplastic elastomer.

5. The laminated plastic film for food wrapping according to claim 1 in which the hydrogenated petroleum resin as the component (b) in the resin composition forming the core layer has a molecular weight in the range from 500 to 900 and a softening point in the range from 90 to 150°C.

6. The laminated plastic film for food wrapping according to claim 1 in which the polyethylene-based resin forming the covering layers is an ethylene/vinyl acetate copolymer, low-density polyethylene or low-density polyethylene having a straightly linear molecular structure.

7. The laminated plastic film for food wrapping according to claim 1 in which the core layer has a thickness in the range from 3 to 20 µm and each of the covering layers has a thickness of at least 1 µm, the total thickness of the core layer and the covering layers being in the range from 8 to 25 µm.

8. The laminated plastic film for food wrapping according to claim 1 wherein the core layer (A) is formed from a resin comprising in addition to components (a) and (b) as component (c) from 3 to 30 parts by weight of a styrene-based thermoplastic elastomer.

9. The laminated plastic film for food wrapping according to claim 8 in which the styrene-based thermoplastic elastomer as the component (c) is a hydrogenated copolymer of an aromatic vinyl compound and a conjugated diene compound, the degree of hydrogenation being at least 80%.

10. The laminated plastic film for food wrapping according to claim 9 in which the amount of the aromatic vinyl compound in the hydrogenated copolymer of an aromatic vinyl compound and a conjugated diene compound is in the range from 10 to 40% by weight.

11. The laminated plastic film for food wrapping according to claim 8 in which the amount of the styrene-based thermoplastic elastomer as the component (c) in the resin composition forming the core layer is in the range from 5 to 25 parts by weight per 100 parts by weight of the olefin-based thermoplastic elastomer as the component (a).

12. The laminated plastic film for food wrapping according to claim 1 wherein the core layer (A) is formed from a resin comprising in addition to components (a) and (b) as component (d) from 5 to 65 parts by weight of a low-density polyethylene of a straightly linear molecular structure.

13. The laminated plastic film for food wrapping according to claim 12 in which the low-density polyethylene of a straightly linear molecular structure as the component (d) is a copolymer of ethylene and an α-olefin compound having 4 to 12 carbon atoms in a molecule, the weight fraction of the α-olefin moiety in the copolymer being in the range from 3 to 30%.

14. The laminated plastic film for food wrapping according to claim 12 in which the amount of the low-density polyethylene of a straightly linear molecular structure as the component (d) in the resin composition forming the core layer is in the range from 10 to 60% by weight per 100 parts by weight of the olefin-based thermoplastic elastomer as the component (a).

15. The laminated plastic film for food wrapping according to claim 1 wherein the core layer (A) is formed from a resin comprising in addition to components (a) and (b) as component (c) from 3 to 30 parts by weight of a styrene-based thermoplastic elastomer and as component (d) from 5 to 65 parts by weight of a low-density polyethylene of a straightly linear molecular structure.

## Patentansprüche

1. Laminierte Plastikfolie zur Verpackung von Lebensmitteln, welche
(A) eine Kernschicht, die aus einer Harzzusammensetzung gebildet ist, welche (a) 100 Gewichtsteile eines thermoplastischen Elastomers auf Basis von Olefin und (b) 5 bis 45 Gewichtsteile eines hydrierten Petroleumharzes aufweist, und (B) zwei aus einem Harz auf Basis von Polyethylen gebildete, jeweils auf einer der Oberflächen der Kernschicht gebundene Deckschichten umfasst.

2. Laminierte Plastikfolie zur Verpackung von Lebensmitteln nach Anspruch 1, in welcher das thermoplastische Elastomer auf Basis von Olefin als Komponente (a) eine aus einem Polypropylen und einem Ethylen/Propylen-Copolymer-Kautschuk bestehende Copolymer-Polymer-Legierung ist.

3. Laminierte Plastikfolie zur Verpackung von Lebensmitteln nach Anspruch 2, in welcher der Gehalt des Ethylen/Propylen-Copolymer-Kautschuks in der als Komponente (a) fungierenden Copolymer-Polymer-Legierung im Bereich von 40 bis 80 Gew.-% liegt, wobei der Rest das Polypropylen ist.

4. Laminierte Plastikfolie zur Verpackung von Lebensmitteln nach Anspruch 1, in welcher der Gehalt des als Komponente (b) fungierenden hydrierten Petroleumharzes in der die Kernschicht bildenden Harzzusammensetzung im Bereich von 10 bis 40 Gewichtsteilen pro 100 Gewichtsteile an thermoplastischem Elastomer auf Basis von Olefin liegt.

5. Laminierte Plastikfolie zur Verpackung von Lebensmitteln nach Anspruch 1, in welcher das hydrierte Petroleumharz als die Komponente (b) in der die Kernschicht bildenden Harzzusammensetzung ein Molekulargewicht im Bereich von 500 bis 900 und einen Erweichungspunkt im Bereich von 90 bis 150°C aufweist.

6. Laminierte Plastikfolie zur Verpackung von Lebensmitteln nach Anspruch 1, in welcher das die Deckschichten bildende Harz auf Basis von Polyethylen ein Ethylen-Vinylacetat-Copolymer, ein Polyethylen vom LD-Typ oder ein Polymer vom LLD-Typ ist.

7. Laminierte Plastikfolie zur Verpackung von Lebensmitteln nach Anspruch 1, in welcher die Kernschicht eine Dicke im Bereich von 3 bis 20 µm und die Deckschichten jeweils eine Dicke von mindestens 1 µm aufweisen, wobei die Gesamtdicke der Kernschicht und der Deckschichten im Bereich von 8 bis 25 µm liegt.

8. Laminierte Plastikfolie zur Verpackung von Lebensmitteln nach Anspruch 1, in welcher die Kernschicht (A) von einem Harz gebildet wird, das zusätzlich zu den Komponenten (a) und (b) 3 bis 30 Gewichtsteile eines thermoplastischen Elastomers auf Basis von Styrol als Komponente (c) umfasst.

9. Laminierte Plastikfolie zur Verpackung von Lebensmitteln nach Anspruch 8, in welcher das thermoplastische Elastomers auf Basis von Styrol als Komponente (c) ein hydriertes Copolymer einer aromatischen Vinylverbindung und einer konjugierten Dienverbindung ist, wobei der Hydrierungsgrad mindestens 80% beträgt.

10. Laminierte Plastikfolie zur Verpackung von Lebensmitteln nach Anspruch 9, in welcher der Gehalt der aromatischen Vinylverbindung im hydrierten Copolymer einer aromatischen Vinylverbindung und einer konjugierten Dienverbindung im Bereich von 10 bis 40 Gew.-% liegt.

11. Laminierte Plastikfolie zur Verpackung von Lebensmitteln nach Anspruch 8, in welcher der Gehalt des als Komponente (c) fungierenden thermoplastischen Elastomers auf Basis von Styrol in der die Kernschicht bildenden Harzzusammensetzung im Bereich von 5 bis 25 Gewichtsteilen pro 100 Gewichtsteile an thermoplastischem Elastomer auf Basis von Olefin als Komponente (a) liegt.

12. Laminierte Plastikfolie zur Verpackung von Lebensmitteln nach Anspruch 1, in welcher die Kernschicht (A) von einem Harz gebildet wird, das zusätzlich zu den Komponenten (a) und (b) 5 bis 65 Gewichtsteile eines Polyethylens vom LLD-Typ als Komponente (d) aufweist.

13. Laminierte Plastikfolie zur Verpackung von Lebensmitteln nach Anspruch 12, in welcher das Polyethylen vom LLD-Typ als Komponente (d) ein Copolymer aus Ethylen und einer -Olefinverbindung mit 4 bis 12 Kohlenstoffatomen pro Molekül ist, wobei der Gewichtsanteil des -Olefinrestes im Coplymer im Bereich von 3 bis 30% liegt.

14. Laminierte Plastikfolie zur Verpackung von Lebensmitteln nach Anspruch 12, in welcher der Gehalt des Polyethylens vom LLD-Typ als Komponente (d) in der die Kernschicht bildenden Harzzusammensetzung im Bereich von 10 bis 60 Gew.-% pro 100 Gewichtsteile thermoplastisches Elastomer auf Basis von Olefin als Komponente (a) liegt.

15. Laminierte Plastikfolie zur Verpackung von Lebensmitteln nach Anspruch 1, in welcher die Kernschicht (A) von einem Harz gebildet wird, das zusätzlich zu den Komponenten (a) und (b) 3 bis 30 Gewichtsteile eines thermoplastischen Elastomers auf Basis von Styrol als Komponente (c) und 5 bis 65 Gewichtsteile eines Polyethylens vom LLD-Typ als Komponente (d) umfasst.

## Revendications

1. Feuille plastique laminée pour l'emballage de denrées comportant:
(A) une couche centrale formée à partir d'une composition de résine comportant (a) 100 parties en poids d'un élastomère thermoplastique basé à l'oléfine et (b) de 5 à 45 parties en poids d'une résine de pétrol hydrogénée; et (B) deux couches de recouvrement formée à partir d'une résine à base polyéthylénique dont chacune des couches est liée à une des surfaces de la couche centrale.

2. Feuille plastique laminée pour l'emballage de denrées d'après la revendication 1, dans laquelle ledit élastomère thermoplastique basée à l'oléfine en tant que le composant (a) est un alliage plastique copolymérisé se constituant d'un polypropylène et d'un caoutchouc copolymérique en éthylène/propylène.

3. Feuille plastique laminée pour l'emballage de denrées d'après la revendication 2, dans laquelle la teneur en caoutchouc copolymérique en éthylène/propylène dans l'alliage plastique copolymérisé comme le composant (a) est de 40 à 80% en poids, le reste étant le polypropylène.

4. Feuille plastique laminée pour l'emballage de denrées d'après la revendication 1, dans laquelle la teneur en résine de pétrol hydrogénée comme le composant (b) dans la composition résineuse formant la couche centrale est dans l'écart de 10 à 40 parties en poids par 100 parties en poids de l'élastomère thermoplastique basé à l'oléfine.

5. Feuille plastique laminée pour l'emballage de denrées d'après la revendication 1, dans laquelle le pétrol hydrogénée comme le composant (b) dans la composition résineuse formant la couche centrale montre un poids moléculaire dans l'écart de 500 à 900 et un point de ramollissement dans l'écart de 90 à 150°C.

6. Feuille plastique laminée pour l'emballage de denrées d'après la revendication 1, dans laquelle la résine à base polyéthylénique formant les couches de recouvrement est un copolymère en acétate éthylénique/vinylique, un polyéthylène du type LD ou un polyéthylène du type LLD.

7. Feuille plastique laminée pour l'emballage de denrées d'après la revendication 1, dans laquelle la couche central montre une épaisseur dans l'écart de 3 à 20 µm et chacune des couches de recouvrement montre un épaisseur d'au moins 1 µm, l'épaisseur totale de la couche centrale et des couches de recouvrement étant dans l'écart de 8 à 25 µm.

8. Feuille plastique laminée pour l'emballage de denrées d'après la revendication 1, dans laquelle la couche central (A) est formée d'une résine comportant en plus des composants (a) et (b) en tant que le composant (c) un élastomère thermoplastique basée au styrène dans l'écart de 3 à 30 parties en poids.

9. Feuille plastique laminée pour l'emballage de denrées d'après la revendication 8, dans laquelle l'élastomère thermoplastique basée au styrène en tant que le composant (c) est un copolymère d'un composé vinylique aromatique et d'un composé diénique conjugué, le degré d'hydrogénation étant 80% au minimum.

10. Feuille plastique laminée pour l'emballage de denrées d'après la revendication 9, dans laquelle la teneur en le composé vinylique aromatique dans le copolymère hydrogéné d'un composé vinylique aromatique et d'un composé diénique conjugué est dans l'écart de 10 à 40% en poids.

11. Feuille plastique laminée pour l'emballage de denrées d'après la revendication 8, dans laquelle la teneur en l'élastomère thermoplastique basée au styrène en tant que le composant (c) dans la composition résineuse formant la couche centrale est dans l'écart de 5 à 25 parties en poids par 100 parties en poids de l'élastomère thermoplastique basée à l'oléfine en tant que le composant (a).

12. Feuille plastique laminée pour l'emballage de denrées d'après la revendication 1, dans laquelle la couche central (A) est formée d'une résine comportant en plus des composants (a) et (b) en tant que le composant (d) un polyéthylène du type LLD dans l'écart de 5 à 65 parties en poids.

13. Feuille plastique laminée pour l'emballage de denrées d'après la revendication 12, dans laquelle le polyéthylène du type LLD comme le composant (d) est un copolymère à partir d'éthylène et d'un composé α-oléfinique avec 4 à 12 atoms de carbone par molécule, la portion en poids de la part α-oléfinique dans le copolymère étant dans l'écart de 3 à 30%.

14. Feuille plastique laminée pour l'emballage de denrées d'après la revendication 12, dans laquelle la teneur en polyéthylène du type LLD comme le composant (d) dans la composition résineuse formant la couche centrale est dans l'écart de 10 à 60% en poids par 100 parties en poids de l'élastomère thermoplastique basé à l'oléfine en tant que le composant (a).

15. Feuille plastique laminée pour l'emballage de denrées d'après la revendication 1, dans laquelle la couche central (A) est formée à partir d'une résine comportant en plus des composants (a) et (b) en tant que le composant (c) un élastomère thermoplastique basée au styrène dans l'écart de 3 à 30 parties en poids et en tant que le composant (d) un polyéthylène du type LLD dans l'écart de 5 à 65 parties en poids.
